# EUROPEAN PATENT APPLICATION

(11) **EP 4 282 511 A1**
(43) Date of publication of application: **29.11.2023**
(21) Application number: 23166465.7
(22) Date of filing: 04.04.2023
(51) Int. Cl.: B01D 53/14

(54) **PROCESS FOR REMOVING CARBON DIOXIDE FROM FLUE GAS**

(71) Applicant: L'AIR LIQUIDE, SOCIETE ANONYME POUR L'ETUDE ET L'EXPLOITATION DES PROCEDES GEORGES CLAUDE, 75007 Paris (FR)
(72) Inventor: Raulli, Elena, 60388 Frankfurt am Main (DE); Meyer, Quentin, 60388 Frankfurt am Main (DE); Chaubet, Lucie, 60388 Frankfurt am Main (DE); Schmid McGuinness, Teja, 60439 Frankfurt am Main (DE); Hänel, Alexander, 60439 Frankfurt am Main (DE); Junger, Jasmin, 60439 Frankfurt (DE)
(74) Representative: Dropsch, Holger

(57) **Abstract**

The present invention relates to a process for removing carbon dioxide from flue gas. Specifically, the present invention relates to a process for removing carbon dioxide from flue gas by scrubbing with a solvent, with less energy consumption for the regeneration of the used solvent. According to the invention, a two-step regeneration sequence of the carbon dioxide laden scrubbing agent is employed which comprises a partial regeneration process step, which may use an acidic regeneration catalyst or a different means of partial regeneration, followed by a hot regeneration step. From the partial regeneration process step, a partially regenerated scrubbing agent stream is obtained and split into two substreams. One of the substreams is recycled to the first absorption zone as a bulk scrubbing agent stream, removing a first, major part of the carbon dioxide. The second substream is routed to a hot generation step, from which a further regenerated scrubbing agent stream is obtained. At least a part of the further regenerated scrubbing agent stream is recycled to the second absorption zone as a fine scrubbing agent stream, removing a second part of the carbon dioxide.

## Description

### Field of the invention

The present invention relates to a process for removing carbon dioxide from flue gas. Specifically, the present invention relates to a process for removing carbon dioxide from flue gas by scrubbing with a solvent, with less energy consumption for the regeneration of the used solvent.

### Prior art

The reduction of carbon dioxide (CO₂) emissions in various chemical and industrial processes is crucial to mitigate the risks and effects of climate change. It follows that high carbon capture rates are targeted on these processes, typically in excess of 90%.

In chemical and industrial processes that involve a combustion step, while a certain carbon capture rate can sometimes be achieved on a process gas in favourable conditions (high CO₂ concentration or partial pressure, high pressure, limited impurities), a certain portion of the CO₂ emissions are always emitted at lower concentrations and pressures in the flue gas that results from the combustion reaction. CO₂ capture on the flue gas is consequently often required in order to reach a high capture rate of 90 % or more, whether on its own or in combination with carbon capture on a process or pre-combustion gas.

The reference process for capturing CO₂ at low concentrations (< 25 %) from low pressure gasses is a chemical absorption technology, typically an amine wash unit with a solvent (scrubbing agent) adapted for the conditions and impurities of the flue gas.

While a capture rate of up to 95 % can typically be achieved with a chemical wash technology on such a flue gas, the unfavourable conditions lead to a higher energy consumption for the carbon capture unit, which in turn often results in higher indirect emissions. In many cases there is insufficient heat available in the wider process and an auxiliary heat source must be foreseen to cover energy needs of the solvent-based capture process. Assuming a fossil origin of the energy source, indirect emissions are generated contributing to the carbon footprint of the overall process. In order to offset such indirect emissions, the necessity to oversize the above mentioned unit arises, with increased operating and capital cost as a consequence.

A reduction in the specific heat or energy consumption of chemical absorption technologies is therefore critical in allowing for their deployment at an industrial scale.

While chemical absorption technologies have a higher selectivity for CO₂ removal, and can thus address lower CO₂ concentrations than alternatives such as physical absorption, adsorption, permeation or cryogenic separation, they are also energy intensive.

The desorption step in a chemical wash, for example in an amine wash, is more critical in regards to energy consumption, however. In a typical chemical wash process, heat must be supplied to desorb CO₂ to a sufficient extent, in orderto maximize the cyclic loading capacity of the solvent and therefore maximize the efficiency of the process and minimize the economy of the overall process. High temperatures (120-130 °C) are usually required for this purpose with a threshold imposed by solvent thermal degradation. This additionally leads to water evaporation in aqueous solvents at the pressure conditions selected for the desorption column. The water vapor generated in the regeneration column also acts as a stripping medium in the regeneration column. The necessity of reaching high temperatures, also demands the use of high grade heat sources such as Low or Medium Pressure Steam, which are often not available in industrial facilities.

The mentioned steam generated by solvent evaporation accounts for the energy intensity of the process. Desorption at temperatures beneath 100 °C and typical atmospheric pressure, although avoids water evaporation, results in poor CO₂ desorption, due to thermodynamic limitation The use of waste heat at such temperatures, is effective to preheat the rich solvent, but not to desorb CO₂ in significant quantities.

Accordingly, there is a need for improved processes for removing carbon dioxide from flue gas, and regenerating the used solvent or scrubbing agent with a low energy consumption.

### Description of the invention

It is therefore an object of the invention to specify a scrubbing process or gas purification process suitable therefor, which provides energetic optimization through improved regeneration of the used, laden solvent.

This object is substantially achieved in a first aspect of the invention by a process having the features of claim 1. Further embodiments according to further aspects of the process according to the invention may be found in the dependent claims.

The term scrubbing agent, synonymous with absorption medium or solvent, is in the context of the present invention to be understood as meaning substances or substance mixtures which under process conditions are in the form of a liquid, have an absorption capacity for the components to be separated from the gas and may be regenerated by physical methods, for example by flashing or by hot regeneration.

Chemical washes, like amine washes, which are known per se and frequently used for the absorption of acid gases such as carbon dioxide, are based on chemical absorption (chemisorption). Chemical absorption takes advantage of the chemical reaction between absorbed substance (e.g. acid gas such as CO₂) and the solvent active component (e.g. amine) to form a rich liquid, which is regenerated by means of heat to break the chemical bonds formed in the absorption step. Chemical absorption is therefore well suited to achieve high capture rates and purities even at relatively low feed pressures as opposed to physical solvents.

In amine washing, slightly alkaline aqueous solutions of amines are used in an absorption unit (absorption section) usually designed as a washing column. Absorption takes place at low temperature, e.g., 40 °C. Fresh or regenerated absorbent is fed at the top of the column and the gas stream to be separated is introduced in the lower section of the scrubbing column. In this process, carbon dioxide is reversibly chemically absorbed. The gas, which is depleted in carbon dioxide, leaves the column at the top and the loaded scrubbing agent is discharged at the bottom of the column and fed into a desorption section. In the desorption column (regeneration section), the reaction reverses the chemical equilibrium at a higher temperature and low pressure, thus releasing the absorbed carbon dioxide as a gas. It can then be discharged at the head of the desorption column for further use or sequestration. The absorbent regenerated in this way is returned to the absorption section.

Absorption apparatuses are often arranged in the form of absorption columns. An absorption column, alternatively referred to for example as a gas scrubber or scrubbing column, is a process engineering apparatus in which a gas stream is intensively contacted with a liquid stream to achieve uptake of constituents of the gas stream in the liquid. The configuration thereof aims to generate the largest possible liquid surface area for the best possible mass transfer between the gas and liquid phase. This may be effected by generating bubbles or droplets or by trickling onto solid surfaces. It is therefore usual to provide surface area-enlarging internals such as trays, for example sieve trays or bubble-cap trays, or structured packing; alternatively sections of the absorption column may be filled with random packing such as for example spheres, cylinders, rings or saddles. In terms of construction, absorption columns are usually configured as upright pipes, optionally by combination of pipe sections, which extend along a longitudinal axis running parallel to the vertical and which encompass an interior of the absorption column. Different absorption zones may be comprised in an absorption apparatus and are often but not necessarily separated from one another in terms of construction. The different absorption zones may be fed with different scrubbing agents.

A hot regeneration apparatus, in particular a hot regeneration column, is to be understood as meaning a process engineering apparatus which is similar to an absorption column in terms of construction but whose purpose is that of very largely freeing absorbent/scrubbing agent laden with gas components of said components and thus regenerating the scrubbing agent by desorption through introduction of heat. This is technically achieved for example by providing the hot regeneration column with a reboiler for heating the column sump, thus producing scrubbing agent intrinsic vapour which serves as an expulsion, desorption and stripping medium and thus promotes desorption of the gas components.

Enrichment or depletion of a component in a mixture, a fraction or a material stream is to be understood as meaning a measure, operation or process step which has the result that the mole fraction or mass fraction of this component increases (enrichment) or decreases (depletion).

The predominant portion of a fraction, of a material stream, etc. is to be understood as meaning a proportion quantitatively greater than all other proportions each considered alone. Especially in the case of binary mixtures or in the case of resolving a fraction into two parts this is to be understood as meaning a proportion of more than 50% by weight unless otherwise stated in the specific case.

The indication that a material stream consists predominantly of one component or group of components is to be understood as meaning that the mole fraction or mass fraction of this component or component group is quantitatively greater than all other proportions of other components or component groups in the material stream each considered alone. Especially in the case of binary mixtures this is to be understood as meaning a proportion of more than 50 %. Unless otherwise stated in the specific case this is based on the mass fraction.

In the context of the present invention, a division of a material stream is to be understood as meaning production of at least two sub-streams from the original material stream, but having the same composition as the original material stream. In contrast, a separation of a material stream means production of at least two sub-streams from the original material stream, but along with an intentional alteration of the composition of matter of the obtained sub-streams with respect to the original material stream, for example through application of a thermal separation process to the original material stream.

In the context of the present invention solvent loading is to be understood as meaning the concentration of the acid gas, such as CO₂, in the scrubbing agent, defined as the quantity of acid gas per quantity of components able to chemically bind CO₂.

A fluid connection between two regions is to be understood as meaning any type of connection whatsoever which makes it possible that a fluid, for example the liquid scrubbing medium, can flow from the one to the other of the two regions, neglecting any interposed regions, component parts, valves or apparatuses.

Means for providing, supplying or discharging material streams to or from process stages or apparatus parts are to be understood as meaning all apparatuses, component parts and devices which a person skilled in the art would consider utilizing in the particular situation, in particular reservoir vessels, conduits, isolating and metering apparatuses such as for example valves, conveying apparatuses such as for example pumps, blowers, compressors.

Any pressure figures in the unit bar(a) are based on the absolute pressure in bar, absolute, unless stated otherwise in the individual case.

When it is specified that partially regenerating a carbon dioxide enriched scrubbing agent stream is performed in such a way that a certain ratio of the carbon dioxide loading of a partially regenerated scrubbing agent stream to the carbon dioxide loading of the carbon dioxide enriched scrubbing agent stream is obtained, the respective partial regeneration process step may be controlled by manipulating process parameters like temperature, pressure, pressure drop, residence time, presence of a selected catalyst, energy input, for example heat input, or input of electromagnetic energy. This list is not exhaustive, and the skilled practitioner will consider and find additional ways and means to control the partial regeneration process step.

The invention is based on the finding that the energy consumption, specifically the reboiler duty, for the regeneration of the used scrubbing agent, laden with an acid gas such as carbon dioxide from flue gases, is significantly reduced if a two-step regeneration sequence is employed which comprises the features of claim 1.

From the partial regeneration process step, a partially regenerated scrubbing agent stream is obtained and split into two sub-streams. One of the sub-streams, here called first scrubbing agent, is recycled to a first absorption zone as a bulk scrubbing agent stream, absorbing a first, major part of the acid gas, such as carbon dioxide, from the flue gas, resulting into a first carbon-dioxide depleted flue gas. The second substream is routed to a hot generation step, from which a further regenerated scrubbing agent stream is obtained, here called second scrubbing agent. At least a part of the further regenerated scrubbing agent stream is recycled to a second absorption zone as a fine scrubbing agent stream, absorbing a second part of the acid gas, such as carbon dioxide, from the flue gas, resulting into a second carbon-dioxide depleted flue gas.

In the partial regeneration stage, the enriched scrubbing agent is partially regenerated in such a way that the ratio between the CO₂ loading of the partially regenerated stream and the CO₂ loading of the enriched scrubbing agent stream is equal to or lower than 0.9. This ratio is indicated with the Greek letter λ (lambda). Experiments and/or calculations show that by using these ratios, special advantages for the energy balance of the desorption unit and for the integrated process or apparatus are obtained.

### Particular embodiments of the invention

A second aspect of the process according to the invention is characterized in that the second absorption zone is arranged above the first absorption zone in the absorption column, and in that the first scrubbing agent stream is introduced into the absorption column above or in the region of the first absorption zone, and in that the second scrubbing agent stream is introduced into the absorption column above or in the region of the second absorption zone. In this manner, a compact apparatus is obtained and requirements concerning installation area or footprint are reduced.

A third aspect of the process according to the invention is characterized in that the ratio of the first partially regenerated scrubbing agent sub-stream to the sum of the first and second partially regenerated scrubbing agent sub-streams is between and including 0.45 and 0.90. Experiments and/or calculations show that by using these ratios, special advantages for the energy balance of the desorption unit and for the integrated process or apparatus are obtained.

A fourth aspect of the process according to the invention is characterized in that a third absorption zone is arranged in the absorption column above the second absorption zone, and a stream of water is introduced into the absorption column as a third scrubbing agent stream above or in the region of the third absorption zone, wherein the second carbon dioxide-depleted flue gas stream is contacted with the third scrubbing agent stream in the third absorption zone in countercurrent flow, and wherein a gas stream depleted in the at least one absorbent compound is discharged from the third absorption zone and from the absorption column as a cleaned flue gas stream. In this manner, a compact apparatus is obtained and requirements concerning installation area or footprint are reduced.

A fifth aspect of the process according to the invention is characterized in that the partial regeneration zone and the hot regeneration apparatus are arranged in a common regeneration apparatus, wherein the discharge of the first and second carbon dioxide rich gas streams takes place as a common carbon dioxide product stream from the common regeneration apparatus, and wherein the second carbon dioxide rich gas stream discharged from the hot regeneration apparatus as well as the stripping gas stream or a stripping steam stream is passed through the partial regeneration zone in countercurrent to the first carbon dioxide-enriched scrubbing agent stream and/or to the carbon dioxide-enriched scrubbing agent stream. In this manner, a compact apparatus is obtained and requirements concerning installation area or footprint are reduced. The first and second carbon dioxide rich gas streams are obtained as a common carbon dioxide product stream which can easier be handled for possible further cleaning, processing, or use.

A sixth aspect of the process according to the invention is characterized in that an indirect heat exchange takes place between the first carbon dioxide enriched scrubbing agent stream and the first partially regenerated scrubbing agent substream recycled to the absorption column whereby a preheated first carbon dioxide enriched scrubbing agent stream and a cooled first partially regenerated scrubbing agent sub-stream are obtained. In this manner, special advantages for the energy balance of the integrated process are obtained.

A seventh aspect of the process according to the invention is characterized in that an indirect heat exchange takes place between the preheated first carbon dioxide enriched scrubbing agent stream and the further regenerated scrubbing agent sub-stream recycled to the absorption column, whereby a further preheated first carbon dioxide enriched scrubbing agent stream and a cooled further regenerated scrubbing agent substream are obtained, wherein the further preheated first carbon dioxide-enriched scrubbing agent stream is introduced into the partial regeneration zone. In this manner, special advantages for the energy balance of the integrated process or apparatus are obtained. These advantages are even more pronounced when the sixth and seventh aspect of the process according to the invention are combined.

An eighth aspect of the process according to the invention is characterized in that the partial regeneration of the first carbon dioxide enriched scrubbing agent stream in the partial regeneration zone is carried out by contacting the first carbon dioxide enriched scrubbing agent stream with a solid acidic regeneration catalyst having Lewis or Brønsted acidic centers, wherein the solid acidic regeneration catalyst comprises at least one member selected from the following group:
Metal oxides, such as Al₂O₃, TiO₂, Cr₂O₃, V₂O₅, WOs, MgO, MoOs, MnO₂, Fe₂O₃, NiO, CuO, ZrO₂, Nb₂O₅, Ag₂CO₃, Ag₂O, SnO₂;
metal oxyhydroxides such as TiO(OH)₂, AIO(OH); synthetic and natural zeolites, such as HZSM-5, H-Beta zeolites, silico-alumino-phosphate SAPO-34;
mesoporous silica, such as MCM-41 and SBA-15;
sulfated metal oxides, such as SO₄⁻²/TiO₂ , SO₄⁻²/ZrO₂ and Ce(SO₄)₂/ZrO₂;
sulfated-metal modified catalysts, such as Fe promoted SO₄²⁻/ZrO₂/MCM-41; hybrid composite and metal modified materials.
Experiments and/or calculations show that these components can be effectively used as solid acidic regeneration catalysts.

A ninth aspect of the process according to the invention is characterized in that the partial regeneration of the carbon dioxide-enriched scrubbing agent stream in a partial regeneration zone is carried out by bringing it into contact with a bubble formation promoter, the bubble formation promoter comprising at least one element selected from the following group:
solid porous materials such as metal oxides and metal oxide nanoparticles, zeolites, mesoporous silica, sulfated-metal oxides, sulfated-metal modified materials;
structured or random packing with improved surface roughness;
ultrasounds-inducing devices.
Experiments and/or calculations show that these components and/or devices can be effectively used to promote the formation of carbon dioxide gas bubbles, and thus facilitate the partial regeneration of the CO₂ laden scrubbing agent.

A tenth aspect of the process according to the invention is characterized in that the partial regeneration of the first carbon dioxide enriched scrubbing agent stream in a partial regeneration zone is carried out by contacting it with a solid acidic regeneration catalyst and with a bubble formation promoter, wherein the solid acidic regeneration catalyst also acts as a bubble formation promoter and comprises at least one member selected from the following group:
solid porous materials such as metal oxides and metal oxide nanoparticles, zeolites, mesoporous silica, sulfated-metal oxides, sulfated-metal modified materials. Experiments and/or calculations show that in this manner, partial regeneration of the CO₂ laden scrubbing agent is especially facilitated.

An eleventh aspect of the process according to the invention is characterized in that the partial regeneration of the first carbon dioxide enriched scrubbing agent stream in a partial regeneration zone is carried out by materials providing electrical energy input to an electrochemical cell. Advantageously, in this manner, the use of additional chemical components and creation of additional waste streams are avoided.

A twelfth aspect of the process according to the invention is characterized in that the partial regeneration of the first carbon dioxide enriched scrubbing agent stream is carried out in a partial regeneration zone by exposure to microwave radiation as electromagnetic radiation. Advantageously, in this manner, the use of additional chemical components and creation of additional waste streams are avoided.

A thirteenth aspect of the process according to the invention is characterized in that the maximum temperature of the partially regenerated scrubbing agent stream is 120 °C or lower, preferably 100 °C or lower. Experiments and/or calculations show that by using these maximum temperatures of the partially regenerated scrubbing agent stream, special advantages for the energy balance of the desorption unit and for the integrated process or apparatus are obtained.

A fourteenth aspect of the process according to the invention is characterized in that the scrubbing agent is used as the first and second scrubbing agent and contains at least one absorbent compound that chemisorptively binds carbon dioxide, wherein the at least one absorbent compound is selected from the group comprising:
Amines, preferably primary amines, for example monoethanolamine (MEA), aminomethyl-propanol (AMP), secondary amines, for example ethylenediamine (EDA), piperazine (PZ), butylethanolamine (BEA), tertiary amines for example methyldiethanolamine (MDEA), 3-Dimetyl-1-Aminomethypropanol (3DMA1P), triethy-lendiamine (TEDA) diethylamino-2-butanol (DEAB), 3-(Diethylamino)propylamine (DEAPA);
an inorganic basic solution, preferably a solution of at least one compound, most preferably an aqueous solutions of at least one compound, selected from the group comprising
ammonia, sodium hydroxide, potassium hydroxide, potassium carbonate; wherein the absorbent compound is forms the scrubbing solution together with an inorganic solvent such as water or organic solvent such as methanol.. Experiments and/or calculations show that these components can be effectively used as scrubbing agents, and are suited for the two-step regeneration procedure according to the invention.

A fifteenth aspect of the process according to the invention is characterized in that partially regenerating the first carbon dioxide enriched scrubbing agent stream in the partial regeneration zone is performed by employing at least one partial regeneration process step selected from a group comprising:
contacting with an acidic regeneration catalyst,
contacting with a bubble formation promoter,
exposing to electromagnetic field or radiation,
applying electrical energy in an electrochemical cell.

Experiments and/or calculations show that these partial regeneration processes are effective in partially regenerating the first carbon dioxide enriched scrubbing agent stream with minimal energy requirements.

### Exemplary embodiment

Further features, advantages and possible applications of the invention are also apparent from the following description of exemplary examples and the drawings. All the features described and/or depicted, on their own or in any combination, form the subject-matter of the invention, irrespective of their composition in the claims or their dependency references.
Figures 1 and 2 show schematic representations of the process according to a particular embodiments of the invention.
Figure 3 shows a data chart for comparative example 3.

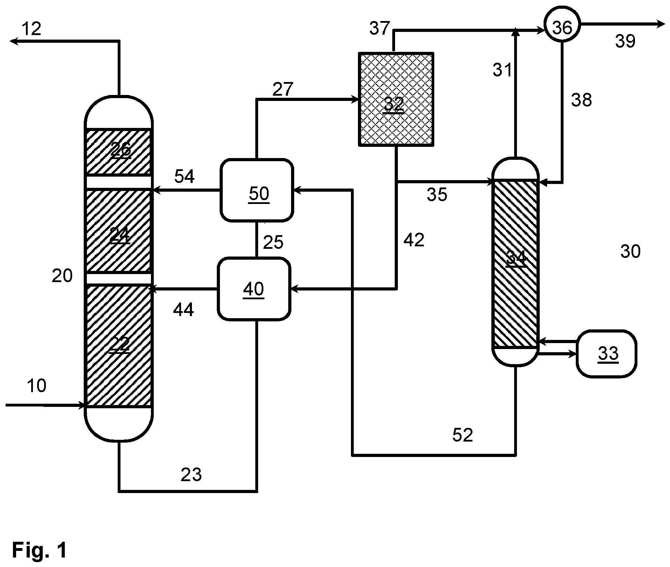

In the schematic representation of the process according to the invention as shown in Fig. 1, a particular embodiment of the invention is shown in the case where the energy for the partial regeneration and further regeneration are provided in the form of heat, and where the partial regeneration takes place in the presence of an heterogeneous acidic solid promoter. Similar setups and energy-saving effects could be obtained with electric or electromagnetic energy for the partial and full regeneration.

In the process shown in Fig. 1, a CO₂-containing flue gas stream is fed via line 10 into an absorption column 20 at its bottom end. The absorption column 20 comprises a first absorption zone 22, a second absorption zone 24, and a third absorption zone 26, all absorption zones being provided with surface enlarging internals such as trays, structured packing or random packing.

In the first absorption zone 22, the CO₂-containing flue gas stream is contacted under first carbon dioxide absorption conditions with a first scrubbing agent stream in countercurrent flow. The first scrubbing agent stream containing amines, is introduced into absorption column 20 via line 44 and enters the first absorption zone 22 at its top end. A first carbon dioxide depleted flue gas stream is discharged from the first absorption zone 22 and enters the second absorption zone 24. A first carbon dioxide enriched scrubbing agent stream is discharged from the first absorption zone and from the absorption column via line 23.

In the second absorption zone 24, the first carbon dioxide depleted flue gas stream is contacted under second carbon dioxide absorption conditions with a second scrubbing agent stream in countercurrent flow. The second scrubbing agent stream containing amines, is introduced into absorption column 20 via line 54 and enters the second absorption zone 24 at its top end. A second carbon dioxide depleted flue gas stream is discharged from the second absorption zone 24 and enters the third absorption zone 26. A second carbon dioxide enriched scrubbing agent stream is discharged from the second absorption zone and introduced into the first absorption zone, wherein the second carbon dioxide enriched scrubbing agent stream forms a part of the first scrubbing agent stream in the first absorption zone.

In the third absorption zone 26, the second carbon dioxide depleted flue gas stream, which contains traces of amines from the absorption processes in the first and second absorption zones, is contacted with water as a third scrubbing agent, fed into the absorption column 20 via a separate line (not shown), in countercurrent flow. A cleaned flue gas stream is discharged via line 12 from the third absorption zone 26 and from the absorption column 20. A water stream enriched in amines is discharged from the third absorption zone and partially introduced into the second absorption zone, partially recycled to the top of the third absorption zone 26 in a loop, wherein amine loaded water stream forms a part of the second scrubbing agent stream in the second absorption zone.

The first carbon dioxide enriched scrubbing agent stream, discharged from the first absorption zone and from the absorption column, is routed to a regeneration apparatus 30 via lines 23, 25 and 27, and heated at least in two steps in heat exchangers 40 and 50 by indirect heat exchange.

The regeneration apparatus 30 comprises a partial regeneration zone 32 and a hot regeneration apparatus or hot regeneration zone 34. The first carbon dioxide enriched scrubbing agent stream is fed into the partial regeneration zone 32, where it is partially regenerated by contacting with an acidic regeneration catalyst. In general, similar setups can be realized by employing method selected from a group comprising: contacting with an acidic regeneration catalyst, contacting with a bubble formation promoter, exposing to electromagnetic field or radiation, applying electrical energy in an electrochemical cell.

From the partial regeneration zone, a first carbon dioxide rich gas stream is discharged via line 37, separated from liquid constituents in a phase separator 36, and routed out of the process as a carbon dioxide rich gas stream via line 39. The separated liquid constituents are recycled to the regeneration apparatus via line 38. In addition, a carbon dioxide depleted, partially regenerated scrubbing agent stream is discharged from the partial regeneration zone and divided into a first partially regenerated scrubbing agent sub-stream and a second partially regenerated scrubbing agent sub-stream.

The first carbon dioxide depleted, partially regenerated scrubbing agent sub-stream is recycled to the absorption column 20 via lines 42 and 44, and heat exchanger 40, where it serves to heat up the first carbon dioxide enriched scrubbing agent stream discharged from the first absorption zone. In the first absorption zone 22 of the absorption column 20, the first partially regenerated scrubbing agent sub-stream forms at least a part of the first scrubbing agent stream.

The second partially regenerated scrubbing agent sub-stream is routed into a hot regeneration apparatus 34 via line 35, where it is regenerated under hot regeneration conditions by stripping with inherent steam, created by a reboiler 33, and/or by a stripping gas stream in the hot regeneration apparatus 30. From the hot regeneration apparatus 34, a second carbon dioxide rich gas stream is discharged via line 31 and is combined with the first carbon dioxide rich gas stream. In addition, a carbon dioxide depleted, further regenerated scrubbing agent stream is discharged from the hot regeneration apparatus and recycled to the absorption column 20 via lines 52 and 54, and heat exchanger 50, where it serves to further heat up the first carbon dioxide enriched scrubbing agent stream discharged from the first absorption zone. In the second absorption zone 24 of the absorption column 20, the further regenerated scrubbing agent sub-stream forms at least a part of the second scrubbing agent stream.

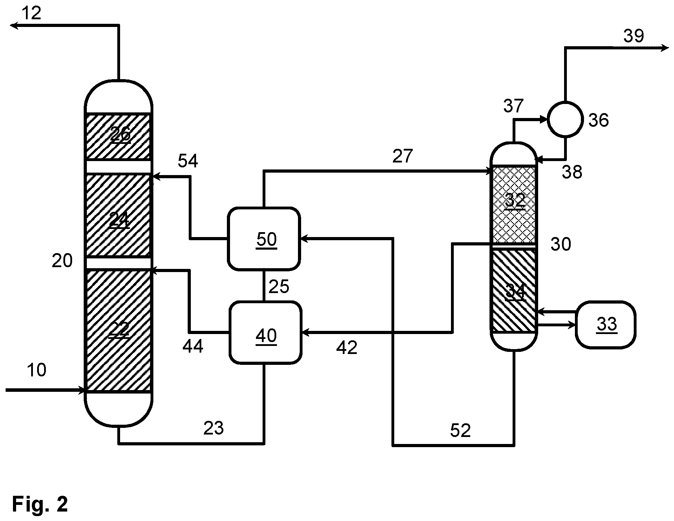

In the schematic representation of the process according to the invention as shown in Fig. 2, a particular embodiment of the invention is shown in the case where the energy for the partial regeneration and further regeneration are provided in the form of heat, and where the partial regeneration takes place in the presence of an heterogeneous acidic solid promoter, and where the regeneration 30 is a combined regeneration apparatus, wherein the partial regeneration step 32 is located above the hot regeneration 34.

In the process shown in Fig. 2, a CO₂-containing flue gas stream is fed via line 10 into an absorption column 20 at its bottom end. The absorption column 20 comprises a first absorption zone 22, a second absorption zone 24, and a third absorption zone 26, all absorption zones being provided with surface enlarging internals such as trays, structured packing or random packing.

In the first absorption zone 22, the CO₂-containing flue gas stream is contacted under first carbon dioxide absorption conditions with a first scrubbing agent stream in countercurrent flow. The first scrubbing agent stream containing amines, is introduced into absorption column 20 via line 44 and enters the first absorption zone 22 at its top end. A first carbon dioxide depleted flue gas stream is discharged from the first absorption zone 22 and enters the second absorption zone 24. A first carbon dioxide enriched scrubbing agent stream is discharged from the first absorption zone and from the absorption column via line 23.

In the second absorption zone 24, the first carbon dioxide depleted flue gas stream is contacted under second carbon dioxide absorption conditions with a second scrubbing agent stream in countercurrent flow. The second scrubbing agent stream containing amines, is introduced into absorption column 20 via line 54 and enters the second absorption zone 24 at its top end. A second carbon dioxide depleted flue gas stream is discharged from the second absorption zone 24 and enters the third absorption zone 26. A second carbon dioxide enriched scrubbing agent stream is discharged from the second absorption zone and introduced into the first absorption zone, wherein the second carbon dioxide enriched scrubbing agent stream forms a part of the first scrubbing agent stream in the first absorption zone.

In the third absorption zone 26, the second carbon dioxide depleted flue gas stream, which contains traces of amines from the absorption processes in the first and second absorption zones, is contacted with water as a third scrubbing agent, fed into the absorption column 20 via a separate line (not shown), in countercurrent flow. A cleaned flue gas stream is discharged via line 12 from the third absorption zone 26 and from the absorption column 20. A water stream enriched in amines is discharged from the third absorption zone and partially introduced into the second absorption zone, partially recycled to the top of the third absorption zone 26 in a loop, wherein amine loaded water stream forms a part of the second scrubbing agent stream in the second absorption zone.

The first carbon dioxide enriched scrubbing agent stream, discharged from the first absorption zone and from the absorption column, is routed to a combined regeneration apparatus 30 via lines 23, 25 and 27, and heated in two steps in heat exchangers 40 and 50 by indirect heat exchange.

The combined regeneration apparatus 30 comprises a partial regeneration zone 32 and a hot regeneration apparatus or hot regeneration zone 34. The first carbon dioxide enriched scrubbing agent stream is fed into the partial regeneration zone 32, where it is partially regenerated by employing contacting with an acidic regeneration catalyst.

From the partial regeneration zone, a first carbon dioxide rich gas stream is discharged via line 37, separated from liquid constituents in a phase separator36, and routed out of the process as a carbon dioxide rich gas stream via line 39. The separated liquid constituents are recycled to the combined regeneration apparatus via line 38. In addition, a carbon dioxide depleted, partially regenerated scrubbing agent stream is discharged from the partial regeneration zone and divided into a first partially regenerated scrubbing agent sub-stream and a second partially regenerated scrubbing agent sub-stream.

The first carbon dioxide depleted, partially regenerated scrubbing agent sub-stream is recycled to the absorption column 20 via lines 42 and 44, and heat exchanger 40, where it serves to heat up the first carbon dioxide enriched scrubbing agent stream discharged from the first absorption zone. In the first absorption zone 22 of the absorption column 20, the first partially regenerated scrubbing agent sub-stream forms at least a part of the first scrubbing agent stream.

The second partially regenerated scrubbing agent sub-stream is routed into a hot regeneration apparatus 34, where it is regenerated under hot regeneration conditions by stripping with inherent steam, created by a reboiler 33, and/or by a stripping gas stream in the hot regeneration apparatus 30. From the hot regeneration apparatus 30, a second carbon dioxide rich gas stream is discharged which passes the partial regeneration zone 32 and is combined with the first carbon dioxide rich gas stream. In addition, a carbon dioxide depleted, further regenerated scrubbing agent stream is discharged from the hot regeneration apparatus and recycled to the absorption column 20 via lines 52 and 54, and heat exchanger 50, where it serves to further heat up the first carbon dioxide enriched scrubbing agent stream discharged from the first absorption zone. In the second absorption zone 24 of the absorption column 20, the further regenerated scrubbing agent sub-stream forms at least a part of the second scrubbing agent stream.

Conveying means are not shown in Fig. 1 and 2. The skilled practitioner will employ suited conveying means wherever necessary, advisable, or advantageous.

### Numerical examples

The conventional processes according to the prior art, and the process according to the invention were simulated with Aspen Plus v12, using property package data by Aspen Tech. The following numerical Examples 1-4 and Comparative Examples report therefore simulation results of carbon dioxide scrubbing with 30wt% aqueous monoethanolamine (MEA) as a solvent in different configurations. Example 1 and 2 represent the baseline process setups for benchmarking the predicted performance of two exemplary embodiments of the present invention, that will be described in the other Examples 3 and 4. The baseline process simulation of Example 1 was validated against literature data (Faramazi et al., "Results from MEA testing at the CO2 Technology Centre Mongstad: Verification of baseline results in 2015", 13th International Conference on Greenhouse Gas Control Technologies, GHGT-13, 14-18 November 2016, Lausanne, Switzerland). The validated simulation baseline was then used to produce the results corresponding to the Examples presented in the following.

### Example 1:

The performance of a conventional first-generation amine wash system using 30 wt.-% MEA is presented as a first Example. The conventional set up consists of an absorption column where the gas enters saturated at 30 °C and atmospheric pressure (1.11 bara). The regeneration takes place in a stripping column equipped with a reboiler at a temperature of 122 °C and pressure of 1.9 bara. The feed gas is a flue gas stream at the conditions described in Table 1. The described process conditions reflect those employed in the mentioned literature (Faramazi et al., 2016).

The validated baseline simulation was used to generate results suitable for the present Example 1. In particular the system according to Example 1 targets 90% of CO2 removal from the flue gas detailed in Table 1.

At the mentioned conditions, the regeneration energy provided through the steam reboiler is calculated equal to 4.01 GJ/tCO₂ (Table 2).

**Table 1: Flue gas characteristics for the Examples 1 to 4**

| Flue gas conditions | |
|---|---|
| Wet flow rate, Nm3/h | 60391 |

| Composition, wet mol% | |
|---|---|
| Carbon Dioxide, CO₂ | 3.6 |
| Oxygen, O₂ | 14.6 |
| Nitrogen, N₂ | 78.1 |
| Water, H₂O | 3.7 |

### Example 2:

Example 2 reports the performance of a process configuration using a catalytic bed made of acidic solid material upstream the stripping column, as already proposed in the prior art, for example in patent publications WO 2019/039687 A1 or KR 2018023373 A). The partial regeneration block was modelled in Aspen Plus using a shortcut method and inserted in the baseline simulation template.

According to this configuration, the rich solvent is routed to a vessel containing an acidic catalyst, after heating to 90 °C. The solvent stream exiting the catalytic stage has a CO₂ loading corresponding to a value of λ=0.8. This semi-lean solvent is led to the stripper for further regeneration using a steam reboiler. The solvent, the feed, the operating conditions and the target capture rate of Example 2 are same as for Example 1.

At these conditions , the configuration proposed in the prior art requires a specific reboiler duty of 3.65 GJ/tCO2 (Table 2). This translates into 9.1 % of the reboiler duty being saved compared to Example 1.

### Example 3:

The third example reports the performance of an embodiment according to the present invention. According to this third example, the CO₂ rich solvent from the absorption column is led to the partial regeneration stage after heating to 90 °C, producing a semi-lean solvent corresponding to a λ=0.8. In this third example, this semi-lean solvent stream is split into 2 streams according to the present invention: 80% of the flow rate is led back to the absorber at a chosen intermediary height, and 20% of the flow rate is further regenerated in the stripper. Two CO₂ rich streams are produced, one leaving the partial regeneration step, the other leaving the stripping column. The solvent, process operating conditions and capture rate are the same as for Example 1 and 2.

At these conditions, the configuration proposed in Example 3 results in a specific reboiler duty of 1.87 GJ/tCO2 (Table 2). The applied process modification allows to save53.3% of specific reboiler heat duty as compared to the conventional scheme of Example 1, or 45.0% of specific reboiler heat duty as compared to the prior art scheme of Example 2.

### Example 4:

In the fourth example, the CO₂ rich solvent from the absorption column is led to the partial regeneration stage after heating to 90 °C, producing a semi-lean solvent corresponding to a λ=0.8. The solvent stream exiting the catalytic stage is split into 2 streams: 80 % of the flow rate is led back to the absorber at a chosen intermediary height, and 20 % of the flow rate is further regenerated in the stripper. In this fourth example, the stripper overhead wet CO₂ vapours are fed into the catalytic step as a stripping medium. The solvent, process operating conditions and targeted capture rate are the same as for Example 1, 2 and 3.

At these conditions, the configuration proposed in Example 4 results in a specific reboiler duty of 1.69 GJ/tCO2 (Table 2) according to simulation work. This corresponds to 57.9 % savings in specific reboiler heat duty as compared to the conventional scheme of Example 1, or 53.7 % as compared to the prior art scheme of Example 2.

**Table 2. Numerical results for Examples 1-4, Capture rate=90±0.1 %, λ=0.8±0.03**

| | Example 1 | Example 2 | Example 3 | Example 4 |
|---|---|---|---|---|
| SRD (GJ/tCO2) | 4.01 | 3.65 | 1.87 | 1.69 |

### Comparative Example 1

In the following, the reduction of the specific reboiler duty (SRD) is shown as a function of the split fraction ξ, defined as the ratio between the semi-lean solvent sub-stream rerouted to the absorber and the semi-lean solvent stream generated in partial regeneration step. The simulation results are obtained for the feed gas conditions as in the Examples 1-4, by using the same configuration as described for the previously presented Example 4, with 30 wt% MEA as a solvent and 90% capture rate.

**Table 3: Simulation results at different split fractions ξ for a feed containing 3.6% CO₂ wet**

| | | | | | |
|---|---|---|---|---|---|
| **ξ** (%) | 0 | 50 | 60 | 70 | 80 |
| **SRD** (GJ/tCO₂) | 3.64 | 2.72 | 2.58 | 2.17 | 1.69 |

It can be found in literature that chemical absorption of CO₂ with an aqueous solution of a second generation solvent such as the aqueous solution of blended AMP and PZ at the same feed conditions require ~3.0 GJ/tCO₂ reboiler duty for a 90% capture efficiency. The solvent AMP+PZ belongs to the group of second generation amines. The proposed intensified scheme is able to perform better than a second generation amine used in a conventional process configuration, with an intrinsically less energy-efficient but more widely available and well known solvent formulation such as MEA.

### Comparative Example 2

In the following, the reduction of the specific reboiler duty (SRD) is shown as a function of the parameter ξ, defined in the previous comparative example. The simulation results are obtained for a feed gas composition representative of a flue gas from Steam Methane Reforming, where pre-combustion capture is also implemented (CO2: 11.3 mol% dry). The same configuration as described for the previously presented Example 4, with 30 wt% MEA as a capture solvent was used, by adapting the feed gas composition and the process parameters to achieve in all cases 90% CO2 capture rate.

**Table 4: Simulation results at different split fractions for flue gas feed wit 11.3% CO₂ dry**

| | | | | |
|---|---|---|---|---|
| **ξ** (%) | 0 | 50 | 60 | 80 |
| **SRD** (GJ/tCO₂) | 3.6 | 2.5 | 2.2 | 1.5 |

Similarly to what stated in the comparative Example 1, a second generation amine solvent like AMP+PZ would require ~2.5 GJ/tCO₂ reboiler duty for a 90% capture efficiency from a similar flue gas. The proposed intensified scheme is able to perform better than a second generation amine in a conventional process configuration, with a less energy-efficient but more widely available and well known solvent formulation such as MEA.

### Comparative Example 3

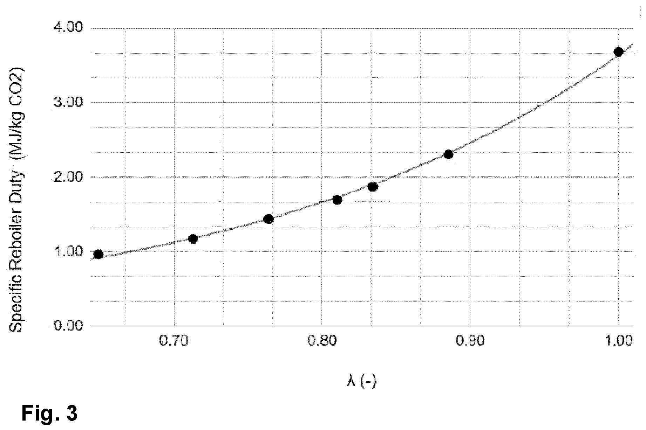

The relationship between the Specific Reboiler Duty (SRD) and the parameter λ, namely the ratio between the CO₂ loading of the semi-regenerated amine and the CO₂ loading of the rich solvent, is given in this third comparative example. Figure 3 reports the specific reboiler duty as a function of the extent of regeneration performed in the partial regeneration apparatus, expressed by the factor lambda λ, for a process based on aqueous 30wt% MEA solution, treating a flue gas with the characteristics as in Example 1. As stated in the Comparative Example 1, in the presence of the enhanced partial regeneration step, the first generation solvent MEA over performs the second generation solvent blend AMP/PZ at similar flue gas conditions. This is true especially for values of λ up to 0.9.

Modifications to embodiments of the present disclosure described in the foregoing are possible without departing from the scope of the present disclosure as defined by the accompanying claims. Expressions such as "including", "comprising", "incorporating", "have", "is" used to describe, and claim the present disclosure are intended to be construed in a non-exclusive manner, namely allowing for items, components or elements not explicitly described also to be present. Reference to the singular is also to be construed to relate to the plural.

### List of reference numerals

- [10]: Line
- [12]: Line
- [20]: Absorption column
- [22]: First absorption zone
- [24]: Second absorption zone
- [26]: Third absorption zone
- [27]: Line
- [28]: Line
- [29]: Line
- [30]: Combined regeneration apparatus
- [32]: Partial regeneration zone
- [33]: Reboiler
- [34]: Hot regeneration apparatus or hot regeneration zone
- [36]: Phase separator
- [37]: Line
- [38]: Line
- [39]: Line
- [40]: Heat exchanger
- [42]: Line
- [44]: Line
- [50]: Heat exchanger
- [52]: Line
- [54]: Line

## Claims

1. Process for separating carbon dioxide from a flue gas stream by gas scrubbing with a liquid scrubbing agent containing at least one absorbent compound which is selective for carbon dioxide absorption, wherein the process comprises the following steps:
(a) Providing an absorption column comprising at least a first and a second absorption zone, each provided with surface enlarging internals such as trays, structured packing or random packing;
(b) providing and introducing the flue gas stream into the absorption column;
(c) contacting the flue gas stream in the first absorption zone under first carbon dioxide absorption conditions with a first scrubbing agent stream in countercurrent flow, discharging a first carbon dioxide depleted flue gas stream from the first absorption zone, discharging a first carbon dioxide enriched scrubbing agent stream from the first absorption zone and from the absorption column;
(d) contacting the first carbon dioxide depleted flue gas stream in the second absorption zone under second carbon dioxide absorption conditions with a second scrubbing agent stream in countercurrent flow, discharging a second carbon dioxide depleted flue gas stream from the second absorption zone, discharging a second carbon dioxide enriched scrubbing agent stream from the second absorption zone, introducing the second carbon dioxide enriched scrubbing agent stream into the first absorption zone, wherein the second carbon dioxide enriched scrubbing agent stream forms at least a part of the first scrubbing agent stream in the first absorption zone;
(e) introducing the first carbon dioxide enriched scrubbing agent stream into a partial regeneration zone, partially regenerating the first carbon dioxide enriched scrubbing agent stream in the partial regeneration zone, in order to generate a partially regenerated scrubbing agent stream, wherein partially regenerating the first carbon dioxide enriched scrubbing agent stream is performed in such a way that the ratio of the carbon dioxide loading of a partially regenerated scrubbing agent stream to the carbon dioxide loading of the first carbon dioxide enriched scrubbing agent stream is equal to or lower than 0.9,
(f) discharging a first carbon dioxide rich gas stream and a carbon dioxide depleted, partially regenerated scrubbing agent stream from the partial regeneration zone;
(g) dividing the partially regenerated scrubbing agent stream into a first partially regenerated scrubbing agent sub-stream and a second partially regenerated scrubbing agent sub-stream, returning the first partially regenerated scrubbing agent sub-stream to the absorption column, wherein the first partially regenerated scrubbing agent sub-stream forms at least a part of the first scrubbing agent stream in the first absorption zone;
(h) introducing the second partially regenerated scrubbing agent sub-stream into a hot regeneration apparatus, regenerating the second partially regenerated scrubbing agent substream under hot regeneration conditions by stripping with inherent steam and/or a stripping gas stream in the hot regeneration apparatus, discharging a second carbon dioxide rich gas stream and a carbon dioxide depleted, further regenerated scrubbing agent stream from the hot regeneration apparatus;
(i) returning the further regenerated scrubbing agent stream to the absorption column, wherein the further regenerated scrubbing agent stream forms at least a part of the second scrubbing agent stream.

2. Process according to claim 1, **characterized in that** the second absorption zone is arranged above the first absorption zone in the absorption column, and **in that** the first scrubbing agent stream is introduced into the absorption column above or in the region of the first absorption zone, and **in that** the second scrubbing agent stream is introduced into the absorption column above or in the region of the second absorption zone.

3. Process according to claim 1 or 2, **characterized in that** the ratio of the first partially regenerated scrubbing agent sub-stream to the sum of the first and second partially regenerated scrubbing agent sub-streams is between and including 0.45 and 0.90.

4. Process according to one of the preceding claims, **characterized in that** a third absorption zone is arranged in the absorption column above the second absorption zone, a stream of water being introduced into the absorption column as a third scrubbing agent stream above or in the region of the third absorption zone, wherein the second carbon dioxide-depleted flue gas stream is contacted with the third scrubbing agent stream in the third absorption zone in countercurrent flow, and wherein a gas stream depleted in the at least one absorbent compound is discharged from the third absorption zone and from the absorption column as a cleaned flue gas stream.

5. Process according to any one of the preceding claims, **characterized in that** the partial regeneration zone and the hot regeneration apparatus are arranged in a common regeneration apparatus, wherein the discharge of the first and second carbon dioxide rich gas streams takes place as a common carbon dioxide product stream from the common regeneration apparatus, and wherein the second carbon dioxide rich gas stream discharged from the hot regeneration apparatus as well as the stripping gas stream or a stripping steam stream is passed through the partial regeneration zone in countercurrent to the first carbon dioxide-enriched scrubbing agent stream and/or to the carbon dioxide-enriched scrubbing agent stream.

6. Process according to one of the preceding claims, **characterized in that** an indirect heat exchange takes place between the first carbon dioxide enriched scrubbing agent stream and the first partially regenerated scrubbing agent sub-stream recycled to the absorption column whereby a preheated first carbon dioxide enriched scrubbing agent stream and a cooled first partially regenerated scrubbing agent sub-stream are obtained.

7. Process according to one of the preceding claims, **characterized in that** an indirect heat exchange takes place between the preheated first carbon dioxide enriched scrubbing agent stream and the further regenerated scrubbing agent sub-stream recycled to the absorption column, whereby a further preheated first carbon dioxide enriched scrubbing agent stream and a cooled further regenerated scrubbing agent substream are obtained, wherein the further preheated first carbon dioxide-enriched scrubbing agent stream is introduced into the partial regeneration zone.

8. Process according to any one of the preceding claims, **characterized in that** the partial regeneration of the first carbon dioxide enriched scrubbing agent stream in the partial regeneration zone is carried out by contacting the first carbon dioxide enriched scrubbing agent stream with a solid acidic regeneration catalyst having Lewis or Bronsted acidic centers, wherein the solid acidic regeneration catalyst comprises at least one member selected from the following group:
Metal oxides, such as Al₂O₃, TiO₂, Cr₂O₃, V₂O₅, WO₃, MgO, MoO₃, MnO₂, Fe₂O₃, NiO, CuO, ZrO₂, Nb₂O₅, Ag₂CO₃, Ag₂O, SnO₂;
metal oxyhydroxides such as TiO(OH)₂, AIO(OH); synthetic and natural zeolites, such as HZSM-5, H-Beta zeolites, silico-alumino-phosphate SAPO-34;
mesoporous silica, such as MCM-41 and SBA-15;
sulfated metal oxides, such as SO₄⁻²/TiO₂ , SO₄⁻²/ZrO₂ and Ce(SO₄)₂/ZrO₂;
sulfated-metal modified catalysts, such as Fe promoted SO₄²⁻/ZrO₂/MCM-41; hybrid composite and metal modified materials.

9. Process according to any one of the preceding claims, **characterized in that** the partial regeneration of the carbon dioxide-enriched scrubbing agent stream in a partial regeneration zone is carried out by bringing it into contact with a bubble formation promoter, the bubble formation promoter comprising at least one element selected from the following group:
solid porous materials such as metal oxides and metal oxide nanoparticles, zeolites, mesoporous silica, sulfated-metal oxides, sulfated-metal modified materials;
structured or random packing with improved surface roughness;
ultrasounds-inducing devices.

10. Process according to any one of the preceding claims, **characterized in that** the partial regeneration of the first carbon dioxide enriched scrubbing agent stream in a partial regeneration zone is carried out by contacting it with a solid acidic regeneration catalyst and with a bubble formation promoter, wherein the solid acidic regeneration catalyst also acts as a bubble formation promoter and comprises at least one member selected from the following group:
solid porous materials such as metal oxides and metal oxide nanoparticles, zeolites, mesoporous silica, sulfated-metal oxides, sulfated-metal modified materials.

11. Process according to any one of the preceding claims, **characterized in that** the partial regeneration of the first carbon dioxide enriched scrubbing agent stream in a partial regeneration zone is carried out by materials providing electrical energy input to an electrochemical cell.

12. Process according to one of the preceding claims, **characterized in that** the partial regeneration of the first carbon dioxide enriched scrubbing agent stream is carried out in a partial regeneration zone by exposure to microwave radiation as electromagnetic radiation.

13. Process according to any one of the preceding claims, **characterized in that** the maximum temperature of the partially regenerated scrubbing agent stream is 120 °C or lower, preferably 100 °C or lower.

14. Process according to any one of the preceding claims, **characterized in that** the scrubbing agent is used as the first and second scrubbing agent and contains at least one absorbent compound that chemisorptively binds carbon dioxide, wherein the at least one absorbent compound is selected from the group comprising:
Amines, preferably primary amines, for example monoethanolamine (MEA), aminomethyl-propanol (AMP), secondary amines, for example ethylenediamine (EDA), piperazine (PZ), butylethanolamine (BEA), tertiary amines for example methyldiethanolamine (MDEA), 3-Dimetyl-1-Aminomethypropanol (3DMA1P), triethy-lendiamine (TEDA) diethylamino-2-butanol (DEAB), 3-(Diethylamino)propylamine (DEAPA);
an inorganic basic solution, preferably a solution of at least one compound, most preferably an aqueous solutions of at least one compound, selected from the group comprising
ammonia, sodium hydroxide, potassium hydroxide, potassium carbonate, wherein the absorbent compound forms the scrubbing agent with an inorganic solvent such as water or organic solvent such as methanol.

15. Process according to any one of the preceding claims, **characterized in that** partially regenerating the first carbon dioxide enriched scrubbing agent stream in the partial regeneration zone is performed by employing at least one partial regeneration process step selected from a group comprising: contacting with an acidic regeneration catalyst, contacting with a bubble formation promoter, exposing to electromagnetic field or radiation, applying electrical energy in an electrochemical cell.
